# EUROPÄISCHE PATENTSCHRIFT

(11) **EP 3 123 079 B1**
(45) Veröffentlichungstag und Bekanntmachung des Hinweises auf die Patenterteilung: **27.06.2018**
(21) Anmeldenummer: 15720777.0
(22) Anmeldetag: 20.03.2015
(51) Int. Cl.: F24D 19/00, F24F 5/00

(54) **VORRICHTUNG UND VERFAHREN ZUM HEIZEN ODER KÜHLEN VON RÄUMEN**
DEVICE AND METHOD FOR HEATING OR COOLING ROOMS
DISPOSITIF ET PROCÉDÉ SERVANT À CHAUFFER OU À REFROIDIR DES PIÈCES

(30) Priorität: 27.03.2014 CH 546142014
(43) Veröffentlichungstag der Anmeldung: 01.02.2017
(73) Patentinhaber: Zehnder Group International AG, 5722 Gränichen (CH)
(72) Erfinder: SCHUMANN, Thomas, CH-9043 Trogen (CH)
(74) Vertreter: Patentanwälte Bregenzer und Reule Partnerschaftsgesellschaft mbB
(86) Internationale Anmeldenummer: PCT/IB2015/000386
(87) Internationale Veröffentlichungsnummer: WO 2015/145240

(56) Entgegenhaltungen:
- EP-A1- 2 636 959
- WO-A1-2012/023906
- WO-A2-2010/150006
- DE-A1- 19 914 615

## Beschreibung

Die Erfindung bezieht sich auf eine Vorrichtung und ein Verfahren zum Heizen oder Kühlen eines Wohnraumes, gemäß dem Oberbegriff des Anspruchs 1.

Eine derartige Vorrichtung sowie ein entsprechendes Verfahren gehen aus EP 2 636 959 A1 hervor.

Das Heizen oder Kühlen eines Raumes mit Wasser als Medium ist seit langem bekannt.

Es hat sich aber gezeigt, dass in neueren (gut isolierten) Räumen die Heizleistung gut regulierbar sein muss (plötzlicher Wärmeeintrag durch Sonneneinstrahlung, plötzlicher Anstieg innerer Wärmelasten bei hoher Belegung eines Raumes) und/oder dass in neueren (gut isolierten) Räumen der Wärme- bzw. Kältebedarf oft von Raum zu Raum sehr unterschiedlich ist. Gemäss Stand der Technik wird mittels thermostatischen Ventilen die Wärmeabgabe je Heizkörper geregelt, wobei die zentrale Umwälzpumpe ständig läuft.

Des weiteren hat sich gezeigt, dass in neueren (gut isolierten) Räumen oft geheizt und gekühlt werden muss. Man möchte aber aus Kostengründen nicht zwei verschiedene Systeme (eines zum Heizen und eines zum Kühlen) installieren.

Moderne Wärme- und Kälteerzeuger haben einen besseren Wirkungsgrad, wenn sie nur mit wenig Temperaturhub arbeiten. Die Vorlauftemperatur ist deshalb oft nur wenige Grad von der Zieltemperatur abweichend. Flächenheizungen, wie z.B. Boden- oder Deckenheizungen, haben einerseits den Nachteil, dass sie relativ träge sind. Normale Heizkörper haben andererseits den Nachteil, dass sie bei kleinen Temperaturhüben nur wenig Leistung bringen.

Der Erfindung liegt die Aufgabe zugrunde, diese genannten Nachteile zu überwinden.

Hierfür stellt die Erfindung eine Vorrichtung zum Heizen oder Kühlen eines Wohnraumes gemäß der technischen Lehre des Anspruchs 1 bereit.

Die Vorrichtung weist einen von einem Wärmeträgerfluid, vorzugsweise Wasser, durchströmbaren Körper auf, welcher eine Vorlaufleitung zum Einleiten von Wärmeträgerfluid in den Körper sowie eine Rücklaufleitung zum Ausleiten von Wärmeträgerfluid aus dem Körper aufweist. Es ist vorgesehen, dass die Vorrichtung eine in der Vorlaufleitung oder in der Rücklaufleitung angeordnete Pumpe zum Befördern von Wärmeträgerfluid durch den Körper aufweist und mindestens einen neben dem Körper angeordneten Ventilator zum Bewegen von Luft relativ zu einer Aussenfläche des Körpers aufweist. Dadurch kann z.B. die Heizleistung oder Kühlleistung einer spezifischen Vorrichtung zum Heizen oder Kühlen eines spezifischen Raumes gesondert hoch- oder heruntergefahren werden, indem man entweder die in der Vorlaufleitung oder in der Rücklaufleitung geschaltete Pumpe sowie den Ventilator hochfährt oder aber die in der Vorlaufleitung oder in der Rücklaufleitung geschaltete Pumpe sowie den Ventilator herunterfährt. Als "Hochfahren" bezeichnet man dabei das Erhöhen der Heiz- oder Kühlleistung, insbesondere auch das Einschalten der Vorrichtung, und als "Herunterfahren" bezeichnet man dabei das Verringern der Heiz- oder Kühlleistung, insbesondere auch das Ausschalten der Vorrichtung.

Vorzugsweise werden die Pumpe und der mindestens eine Ventilator von einer gemeinsamen Energiequelle gespeist. Die gemeinsame Energiequelle kann ein Anschluss am Stromnetz sein, oder es kann eine autonome dezentrale Einheit sein, welche Solarzellen und damit verbundene und dadurch aufladbare Akkuzellen aufweist.

Erfindungsgemäß enthält die Vorrichtung ein Pumpen-Einstellmittel zum Einstellen der Pumpen-Förderleistung und ein Ventilator-Einstellmittel zum Einstellen der Ventilator-Förderleistung. Das Pumpen-Einstellmittel und/oder das Ventilator-Einstellmittel kann manuell oder automatisch angesteuert werden.

Erfindungsgemäß enthält die Vorrichtung einen Lufttemperatur-Sensor zur Bestimmung einer Lufttemperatur an einem Ort in dem Wohnraum. Alternativ oder zusätzlich ist der Vorrichtung ein Lufttemperatur-Sensor zur Bestimmung einer Lufttemperatur, ggfs. an einem anderen Ort, in dem Wohnraum zugeordnet.

Erfindungsgemäß enthält die Vorrichtung mindestens einen Fluidtemperatur-Sensor zur Bestimmung mindestens einer Temperatur des Wärmeträgerfluids in der Vorrichtung.

Erfindungsgemäß enthält die Vorrichtung einen Vorlauftemperatur-Sensor zur Bestimmung der Wärmeträgerfluid-Temperatur in der Vorlaufleitung. Vorzugsweise enthält die Vorrichtung einen Rücklauftemperatur-Sensor zur Bestimmung der Wärmeträgerfluid-Temperatur in der Rücklaufleitung.

Vorzugsweise enthält die Vorrichtung einen Bewegungssensor zur Erfassung der Anwesenheit von Personen in dem Wohnraum. Alternativ oder zusätzlich enthält die Vorrichtung einen weiteren Bewegungssensor an einem Ort in dem Wohnraum zur Erfassung der Anwesenheit von Personen in dem Wohnraum.

Erfindungsgemäß enthält die Vorrichtung eine Regelungseinheit, welche eingangsseitig über eine Datenstrecke mit dem Sensorsignal des Lufttemperatur-Sensors verbunden ist und ausgangsseitig über eine Datenstrecke mit dem Pumpen-Einstellmittel und mit dem Ventilator-Einstellmittel verbunden ist.

Erfindungsgemäß enthält die Vorrichtung eine Regelungseinheit, welche eingangsseitig über eine Datenstrecke mit dem Sensorsignal des mindestens einen Fluidtemperatur-Sensors verbunden ist und ausgangsseitig über eine Datenstrecke mit dem Pumpen-Einstellmittel und mit dem Ventilator-Einstellmittel verbunden ist.

Die Erfindung stellt auch ein Verfahren zum Heizen oder Kühlen eines Wohnraumes, unter Verwendung einer Vorrichtung gemäss einem der vorhergehenden Absätze, gemäß der technischen Lehre des Anspruchs 5 bereit.

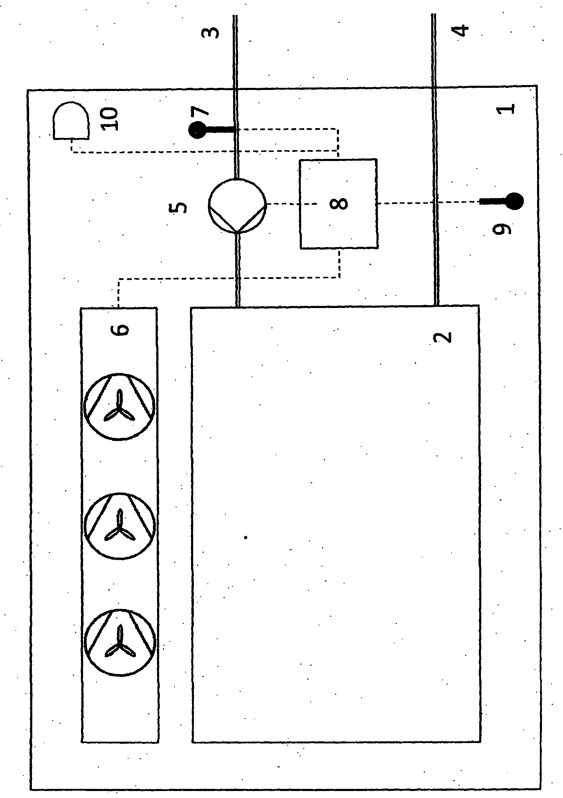

Weitere Vorteile, Merkmale und Anwendungsmöglichkeiten der Erfindung ergeben sich aus der nun folgenden, nicht einschränkend aufzufassenden Beschreibung eines Ausführungsbeispiels der Erfindung anhand der Zeichnung.

Man erkennt in der Zeichnung die schematisch dargestellte Vorrichtung 1 mit einem wasserführenden Körper 2, welcher:
eine Heiz- oder Kühlfläche besitzt, über welche Energie durch Strahlung und durch Konvektion entweder von dem Körper 2 an die Umgebung, d.h. an die Luft, den Boden, die Wände und die Decke eines Raumes, oder von der Umgebung, d.h. von der Luft, dem Boden, den Wänden und der Decke des Raumes, an den Körper 2 abgegeben werden kann;
eine individuelle Pumpe 5 besitzt, die den Wasserfluss (und damit die Wärmeleistung) regeln kann; welcher einen oder mehrere Ventilatoren 6 besitzt, welche die Konvektion und damit die Wärmeleistung massgeblich verstärken können; welcher einen Temperatursensor 7 zur Bestimmung der Vorlauftemperatur besitzt; welcher einen Temperatursensor 9 zur Bestimmung der Raumtemperatur besitzt; welcher einen Bewegungsmelder 10 zur Bestimmung der Raumbelegung mit Personen besitzt;
eine Steuerung 8 besitzt, welche die Pumpen 5 und die Ventilatoren 6 so regelt, dass die gewünschte Solltemperatur im Raum jederzeit erreicht wird.

Die Vorgabe der Solltemperatur kann an der Steuerung 8 selbst, oder über eine kabel- oder funkbasierte Kommunikation von einem externen Bediengerät eingegeben werden.

Die Heizleistungskurve bzw. die Kühlleistungskurve (d.h. die Abhängigkeit der Heizleistung von der Übertemperatur bzw. die Abhängigkeit der Kühlleistung von der Untertemperatur, ohne mechanisch unterstützte Konvektion) ist durch die Geometrie des heizenden bzw. kühlenden Körpers 2 bestimmt und damit bekannt. Die Steuerung 8 kann die geforderte Heizleistung bzw. Kühlleistung unter Zuhilfenahme der Kurve, der gemessenen Übertemperatur bzw. Untertemperatur und der Pumpenleistung in einem breiten Bereich regeln.

Die zusätzliche Wärmeleistung aufgrund der mechanischen Konvektion ist ebenfalls durch die Geometrie des Körpers 2 und die Leistung des Ventilators 6 bekannt. Die Steuerung 8 kann die geforderte Heizleistung bzw. Kühlleistung damit durch die Regelung der Ventilatorleistung in einem breiten Bereich erhöhen.

Insgesamt ergibt sich ein Körper 2 mit heizenden oder kühlenden Flächen, der sehr dynamisch und in einem sehr breiten Bereich Heizleistung bzw. Kühlleistung zur Verfügung stellen kann. Er verhält sich damit fast wie ein flinker elektrischer Heizkörper, bei dem man ebenfalls über einen breiten Bereich die Heizleistung regeln kann.

Dank dem Bewegungsmelder 10 kann der Körper 2 mit heizenden oder kühlenden Flächen erkennen, wann die Solltemperatur wirklich erreicht sein soll. Dank seiner raschen Leistungserhöhung im Bedarfsfalle entsteht keine Komforteinbusse, wenn bei Abwesenheit aus Energiespargründen eine tiefere Raumtemperatur gewünscht wird.

Der Körper 2 bleibt trotz seiner hohen Heizleistung bzw. hohen Kühlleistung klein.

Die Energie, die für die Umwälzung des Heizmediums bzw. Kühlmediums (Wasser) benötigt wird, ist voll bedarfsabhängig. Es gibt keinen Energieverbrauch ohne Nutzen durch eine zentrale Umwälzpumpe.

Die Lösung funktioniert genauso für den Heiz- wie auch für den Kühlfall.

Im Kühlfall sorgt ein erfindungsgemäßer Feuchtefühler dafür, dass der Taupunkt nicht unterschritten wird. Die Regelung kennt dank den Temperatur- und Feuchtefühlern die tiefstmögliche Vorlauftemperatur und kann die Kühlleistung mittels der Umwälzpumpe so regeln, dass sie möglichst hoch ist, ohne den Taupunkt zu erreichen.

### Bezugszeichen:

- 1.: Vorrichtung zum Heizen und/oder Kühlen
- 2.: Körper mit Heiz- bzw. Kühlfläche
- 3.: Vorlaufleitung
- 4.: Rücklaufleitung
- 5.: Umwälzpumpe
- 6.: Ventilatorengruppe (ein oder mehrere axiale oder radiale Ventilatoren)
- 7.: Vorlauftemperatur-Sensor
- 8.: Steuerung
- 9.: Raumtemperatur-Sensor (bzw. Feuchtigkeits-Sensor)
- 10.: Bewegungs- bzw. Präsenzmelder

## Patentansprüche

1. Vorrichtung (1) zum Heizen oder Kühlen eines Wohnraumes, mit einem von einem Wärmeträgerfluid, vorzugsweise Wasser, durchströmbaren Körper (2), welcher eine Vorlaufleitung (3) zum Einleiten von Wärmeträgerfluid in den Körper sowie eine Rücklaufleitung (4) zum Ausleiten von Wärmeträgerfluid aus dem Körper (2) aufweist, wobei die Vorrichtung (1) eine in der Vorlaufleitung (3) oder in der Rücklaufleitung (4) angeordnete Pumpe (5) zum Befördern von Wärmeträgerfluid durch den Körper (2) aufweist und mindestens einen neben dem Körper angeordneten Ventilator (6) zum Bewegen von Luft relativ zu einer Außenfläche des Körpers (2) aufweist, wobei die Vorrichtung (1) einen Lufttemperatur-Sensor zur Bestimmung einer Lufttemperatur in dem Wohnraum aufweist, und wobei die Vorrichtung (1) einen Fluidtemperatur-Sensor, nämlich einen Vorlauftemperatur-Sensor in der Vorlaufleitung (3) aufweist, **dadurch gekennzeichnet, dass** die Vorrichtung (1) eine Regelungseinheit aufweist, welche eingangsseitig über eine Datenstrecke mit einem Sensorsignal des Lufttemperatur-Sensors zur Bestimmung der Lufttemperatur in dem Wohnraum und einem X Sensorsignal des Fluidtemperatur-Sensors, nämlich des Vorlauftemperatur-Sensors in der Vorlaufleitung (3), zur Bestimmung mindestens einer Temperatur des Wärmeträgerfluides in der Vorlaufleitung vrbunden ist und ausgangsseitig über eine Datenstrecke mit einem Pumpen-Einstellmittel zum Einstellen der Pumpen-Förderleistung und mit einem Ventilator-Einstellmittel zum Einstellen der Ventilator-Förderleistung verbunden ist, wobei die Vorrichtung (1) einen Feuchtefühler (9) zur Vermeidung eines Unterschreitens des Taupunkts aufweist, wobei die Regelungseinheit dank den Temperatur- und Feuchtefühlern eine tiefstmögliche Vorlauftemperatur kennt und die Kühlleistung mittels der Pumpe (5) so regeln kann, dass sie möglichst hoch ist, ohne den Taupunkt zu erreichen.

2. Vorrichtung nach Anspruch 1, **dadurch gekennzeichnet, dass** die Pumpe und der mindestens eine Ventilator von einer gemeinsamen Energiequelle gespeist werden.

3. Vorrichtung nach Anspruch 1 oder 2, **dadurch gekennzeichnet, dass** sie zusätzlich als Fluid-temperatur-Sensor einen Rücklauftemperatur-Sensor zur Bestimmung der Wärmeträgerfluid-Temperatur in der Rücklaufleitung aufweist.

4. Vorrichtung nach einem der vorhergehenden Ansprüche, **dadurch gekennzeichnet, dass** sie einen Bewegungssensor zur Erfassung der Anwesenheit von Personen in dem Wohnraum aufweist.

5. Verfahren zum Heizen oder Kühlen eines Wohnraumes, unter Verwendung einer Vorrichtung gemäß einem der Ansprüche 1 bis 4, welches die folgenden Schritte aufweist:
a) Erfassen einer Lufttemperatur in dem Wohnraum und/oder einer Temperatur des Wärmeträgerfluids in der Vorrichtung;
b) Einstellen der Pumpen-Förderleistung und/oder der Ventilator-Förderleistung in Abhängigkeit von der oder den erfassten Temperaturen in Schritt a);
c) Wiederholen der Schritte a) und b), wobei im Kühlfall anhand des Feuchtefühlers (9) dafür gesorgt ist, dass der Taupunkt nicht unterschritten wird.

## Claims

1. Device (1) for the heating or cooling of a living room, with a body (2) through which a heat carrier fluid, preferably water, is able to flow, and which has a feed line (3) for the feeding of heat carrier fluid into the body and a return line (4) for carrying heat carrier fluid away from the body (2), wherein the device (1) has a pump (5) provided in the feed line (3) or in the return line (4) for the conveyance of heat carrier fluid through the body (2), and has at least one fan (6) located next to the body for the movement of air relative to an outer surface of the body (2), wherein the device (1) has an air temperature sensor to determine an air temperature in the living room, and wherein the device (1) has a fluid temperature sensor, namely a feed temperature sensor, in the feed line (3), **characterised in that** the device (1) has a control unit which is connected on the input side via a data link to a sensor signal of the air temperature sensor to determine the air temperature in the living room, and a sensor signal of the fluid temperature sensor, namely of the feed temperature sensor in the feed line (3), to determine at least one temperature of the heat carrier fluid in the feed line, and on the output side via a data link to pump setting means for setting the pump delivery rate and to fan setting means for setting the fan output, wherein the device (1) has a humidity sensor (9) to avoid falling below the dew point, wherein the control unit, thanks to the temperature and humidity sensors, recognizes a lowest possible feed temperature and is so able to regulate the cooling power by means of the pump (5) that it is as high as possible without reaching the dew point.

2. Device available claim 1, **characterised in that** the pump and the fan or fans are fed from a common energy source.

3. Device according to claim 1 or 2, **characterised in that** it also has as fluid temperature sensor a return temperature sensor to determine the heat carrier fluid temperature in the return line.

4. Device according to any of the preceding claims, **characterised in that** it has a movement sensor to detect the presence of persons in the living room.

5. Method of heating or cooling a living room using a device according to any of claims 1 to 4 which has the following steps:
a) detection of an air temperature in the living room and/or a temperature of the heat carrier fluid in the device;
b) setting of the pump delivery rate and/or the fan output depending on the temperature or temperatures detected in step a);
c) repetition of steps a) and b) wherein, in the case of cooling, care is taken with the aid of the humidity sensor (9) to ensure that temperature does not fall below the dew point.

## Revendications

1. Dispositif (1) servant à chauffer ou à refroidir une pièce à vivre, avec un corps (2) pouvant être traversé par un fluide caloporteur, de préférence de l'eau, lequel présente une conduite d'arrivée (3) servant à introduire du fluide caloporteur dans le corps ainsi qu'une conduite de sortie (4) servant à évacuer le fluide caloporteur du corps (2), dans lequel le dispositif (1) présente une pompe (5) disposée dans la conduite d'arrivée (3) ou dans la conduite de sortie (4), servant à refouler du fluide caloporteur à travers le corps (2) et présente au moins un ventilateur (6) disposé à côté du corps, servant à déplacer de l'air par rapport à une surface extérieure du corps (2), dans lequel le dispositif (1) présente un capteur de température de l'air servant à déterminer une température de l'air dans la pièce à vivre, et dans lequel le dispositif (1) présente un capteur de température du fluide, à savoir un capteur de température d'arrivée dans la conduite d'arrivée (3), **caractérisé en ce que** le dispositif (1) présente une unité de régulation, laquelle est reliée côté entrée par l'intermédiaire d'un trajet de données, à un signal de capteur du capteur de température de l'air servant à déterminer la température de l'air dans la pièce à vivre et à un signal de capteur du capteur de température du fluide, à savoir du capteur de température d'arrivée dans la conduite d'arrivée (3) servant à déterminer au moins une température du fluide caloporteur dans la conduite d'arrivée et est reliée côté sortie par l'intermédiaire d'un trajet de données à un moyen de réglage de pompe servant à régler la puissance de refoulement de pompe et à un moyen de réglage de ventilateur servant à régler la puissance de refoulement de ventilateur, dans lequel le dispositif (1) présente une sonde d'humidité (9) servant à éviter une valeur inférieure au point de rosée, dans lequel l'unité de régulation identifie grâce aux sondes de température et d'humidité, une température d'arrivée la plus basse possible et peut réguler la puissance de refroidissement au moyen de la pompe (5) de sorte qu'elle est aussi élevée que possible sans atteindre le point de rosée.

2. Dispositif selon la revendication 1, **caractérisé en ce que** la pompe et l'au moins un ventilateur sont alimentés par une source d'énergie commune.

3. Dispositif selon la revendication 1 ou 2, **caractérisé en ce qu'**il présente en supplément en tant que capteur de température de fluide un capteur de température de sortie servant à déterminer la température du fluide caloporteur dans la conduite de sortie.

4. Dispositif selon l'une quelconque des revendications précédentes, **caractérisé en ce qu'**il présente un capteur de mouvement servant à détecter la présence de personnes dans la pièce à vivre.

5. Procédé servant à chauffer ou à refroidir une pièce à vivre en utilisant un dispositif selon l'une quelconque des revendications 1 à 4, lequel présente les étapes suivantes consistant à :
a) détecter une température de l'air dans la pièce à vivre et/ou une température du fluide caloporteur dans le dispositif ;
b) régler la puissance de refoulement de la pompe et/ou la puissance de refoulement du ventilateur en fonction de la ou des températures détectées à l'étape a) ;
c) répéter les étapes a) et b), dans lequel on s'assure dans le cas du refroidissement à l'aide de la sonde d'humidité (9) que la température ne présente pas une valeur inférieure au point de rosée.
